# FASCICULE DE BREVET EUROPEEN

(11) **EP 2 635 386 B1**
(45) Date de publication et mention de la délivrance du brevet: **21.01.2015**
(21) Numéro de dépôt: 09723008.0
(22) Date de dépôt: 17.03.2009
(51) Int. Cl.: B09B 3/00

(54) **PROCEDE ET DISPOSITIF DE FABRICATION DE MATERIAUX DE CONSTRUCTION DE SYNTHESE**
VERFAHREN UND VORRICHTUNG ZUR HERSTELLUNG VON SYNTHETISCHEN BAUMATERIALIEN
METHOD AND DEVICE FOR MAKING SYNTHETIC CONSTRUCTION MATERIALS

(30) Priorité: 18.03.2008 FR 0851741
(43) Date de publication de la demande: 11.09.2013
(73) Titulaire: Schwetlick, Alexander, 8048 Zürich (CH); Schwetlick, Caroline, London SW19 2SU (GB); Schwetlick, Benedict, Pewsey Wiltshire SN9 5HJ (GB)
(72) Inventeur: Schwetlick, Alexander, 8048 Zürich (CH); Schwetlick, Caroline, London SW19 2SU (GB); Schwetlick, Benedict, Pewsey Wiltshire SN9 5HJ (GB)
(74) Mandataire: Delamare, Raoul
(86) Numéro de dépôt international: PCT/EP2009/001951
(87) Numéro de publication internationale: WO 2009/115289

(56) Documents cités:
- EP-A- 0 496 148
- GB-A- 1 423 230
- US-A- 4 514 307
- US-A- 5 234 498
- US-A- 5 269 975
- US-A- 5 351 630

## Description

La présente invention concerne, de façon générale, le domaine des matériaux de construction, par exemple, de synthèse, pour l'industrie du bâtiment, de la construction et des travaux publics.

La présente invention vise plus particulièrement une valorisation des matières premières alternatives. Par matières premières alternatives, on entend des matières premières qui, de manière classique, ne sont pas prévues pour fabriquer les matériaux de construction. A titre d'illustration, ces matières premières alternatives peuvent comprendre de déchets et/ou de résidus minerais, en particulier d'origine minérale ou/et industrielle, provenant de l'extraction et du traitement d'autres matières premières, de carrières, ou encore de la production du papier telles des boues, de l'industrie sidérurgique tels des mâchefers, de centrales électrique et autre installation de combustion telles des cendres, ou encore de l'agriculture tels des résidus de céréales, la liste n'étant nullement limitative.

La fabrication de matériaux de construction de synthèse par recyclage de matières premières alternatives est confrontée à un problème de qualité et, donc, de rendement. En effet, un compromis délicat doit généralement être réalisé, d'une part, entre l'hétérogénéité intrinsèque des matières premières alternatives, et, d'autre part, l'exigence d'homogénéité, en termes de structure et/ou de propriétés physiques, préétablie et imposée pour tous les matériaux de construction de synthèse, par des normes de l'industrie du bâtiment, de la construction et des travaux publics.

Pour faire face à ce problème technique, une solution connue consiste à confondre les matières premières alternatives les unes avec les autres, par exemple, les résidus minerais avec les déchets, puis à les mettre en décharge, voire en décharge contrôlée. Outre un coût important de cette dernière, cela pose un problème environnemental et/ou de santé publique en raison d'une pollution durable des sols et/ou à une exposition d'opérateurs à des déchets, de la poussière, ou similaire.

Des procédés apparentés connus sont par exemple décrits dans les documents GB-A-1423230 et US-A-269975.

La présente invention, qui s'appuie sur cette observation originale pour but principal de proposer un procédé de granulation exempt de l'une au moins des limitations précédemment évoquées.

A cet effet, l'invention concerne un procédé de granulation pour la fabrication de matériaux de construction de synthèse par recyclage de matières premières alternatives, caractérisé en ce qu'il comprend des étapes suivantes selon lesquelles :
- on transforme des matières premières alternatives à l'aide d'au moins un réacteur comportant au moins un granulateur, en un matériau de construction de synthèse,
- on prélève à l'aide de premiers moyens de prélèvement un échantillon représentatif dudit matériau de construction de synthèse,
- on réalise en temps réel à l'aide d'au moins un premier appareil de mesure une première mesure en analysant au moins un premier constituant du l'échantillon prélevé du matériau de construction de synthèse,
- on compare ladite première mesure avec au moins une première valeur de seuil propre audit premier constituant préalablement mémorisée à l'aide de moyens de mémorisation, en attribuant à la première mesure au moins un premier niveau de priorité prédéterminé,
- on définit à l'aide d'au moins un calculateur au moins une première consigne de régulation pour une mise à jour de régulation des moyens de régulation dudit granulateur en appliquant au moins une première règle prédéterminée préalablement mémorisée à l'aide desdits moyens de mémorisation, ladite première règle prédéterminée étant propre audit premier niveau de priorité de ladite première mesure.

Grâce à ces caractéristiques, il est possible d'optimiser une stratégie de fabrication et, notamment, une stratégie de transformation des matières premières alternatives à l'aide du réacteur et, en particulier, à l'aide du granulateur, en ajustant, par exemple, en temps réel, à l'aide de la règle prédéterminée, un réglage des moyens de régulation du granulateur à un moment donné T_{N} à partir des données de mesure obtenues au moment précédent correspondant T_{N-1}. Ainsi, contrairement à l'état de l'art qui imposait la mise en décharge des matières premières alternatives confondues les unes avec les autres, le procédé selon l'invention permet de recycler les matières premières alternatives. En particulier, le procédé selon l'invention permet de faire varier la transformation des matières premières alternatives, par exemple, en temps réel, pour une meilleure prise en compte des variabilités intrinsèques de ces matières premières alternatives, afin que le matériau de construction de synthèse ainsi obtenu présente des propriétés, par exemple structurelles et/ou mécaniques, et/ou physiques et/ou chimiques, prédéterminées répondant, dans la limite de qualité convenue, à un cahier des charges préétabli. Plus généralement, cela permet d'utiliser les matières premières alternatives et, notamment, des déchets et/ou des résidus minerais, comme des matériaux de substitution des matières premières conventionnelles de construction, à savoir, du sable, des granulés, de la ponce, des granulats légers industriels, par exemple de l'argile expansé, du ciment Il est à noter que ces dernières font parties des ressources non renouvelables. Leur remplacement par des matières premières alternatives est donc bénéfique sur le plan environnemental et contribue à un développement durable des industries. De même, cette substitution permet de faire face, dans certaines régions du globe, à la rareté des matières premières conventionnelles de construction, voire à leur carence. En outre, dans ces même régions, le remplacement des matières premières conventionnelles de construction contribue à une économie de l'énergie et à une réduction de pollution environnementale car il n'est plus nécessaire de transporter ces ressources non renouvelables à des distances toujours plus grandes entre des sites de production et des sites d'utilisation.

L'invention concerne encore un dispositif de fabrication pour la mise en oeuvre dudit procédé de granulation selon l'invention.

A cette fin, le dispositif de fabrication comprend au moins un réacteur comportant :
- au moins un granulateur comportant des moyens de régulation,
- un organe de pilotage comportant au moins un calculateur et des moyens de mémorisation,
- au moins un premier appareil de mesure en temps réel d'au moins un des constituants du matériau de construction de synthèse.

Grâce à cet agencement, la présence humaine lors de la fabrication des matériaux de construction de synthèse n'est plus indispensable. Il est possible de recycler des matières premières alternatives 24 heures sur 24, 7 jours sur 7. De même, cela permet d'éviter tout contact de l'opérateur avec les déchets et les poussières et contribue, de ce fait, à éviter a priori tout problème de santé publique.

En outre, le dispositif de fabrication se présente comme un outil unique de fabrication sélective des matériaux de construction de synthèse à partir des matières premières alternatives hétérogènes. Le caractère sélectif du dispositif de préférence automatisé et/ou robotisé, est dû au fait qu'il est destiné à réaliser le procédé selon l'invention qui s'adapte à la variabilité des propriétés intrinsèques des déchets et/ou des résidus minerais. Le dispositif permet en effet d'utiliser de manière sélective, par exemple, la première mesure du premier constituant du matériau de construction de synthèse, pour ajuster le réglage des moyens de régulation du granulateur, puis réitérer ce même cycle pour attendre un niveau de qualité voulue du matériau de construction de synthèse.

D'autres caractéristiques et avantages de l'invention ressortiront clairement de la description qui en est faite ci-après, à titre indicatif et nullement limitatif, en référence aux dessins annexés, dans lesquels :
- la figure 1 représente un diagramme illustrant schématiquement une structure modulaire d'une variante du dispositif de fabrication selon l'invention,
- la figure 2 représente schématiquement une variante du réacteur selon l'invention comprenant un granulateur illustré à l'aide d'une vue simplifiée en coupe longitudinale schématique partielle,
- la figure 3 représente schématiquement un exemple d'un logigramme du procédé selon l'invention.

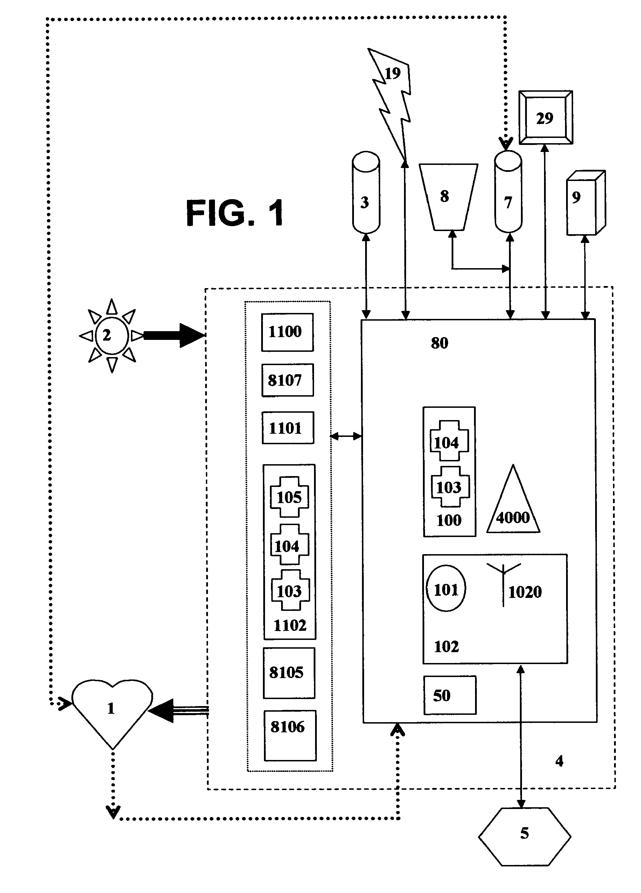

Avant de décrire des moyens et des opérations en rapport avec un dispositif et un procédé selon l'invention, il convient de définir certains termes utilisés dans la présente description et sur les figures 1 à 3.

Une granulométrie des agrégats est calculée par des modèles mathématiques et est comparée avec une courbe granulométrique optimale dite la courbe de Fuller. Cette dernière permet de réduire au maximum la présence d'air dans le milieu, elle donne la meilleure maniabilité possible d'un milieu granulaire optimale tout en garantissant des propriétés mécaniques optimisées de ce milieu. Ces aspects sont évoqués, par exemple, dans l'ouvrage intitulé « Technologie du béton », édité par le Groupement Belge du Béton en 2006, page 285-288. Une conductivité thermique de l'isolation est traitée, de façon connue, à l'aide d'une valeur λ en W/mK. La finesse des agrégats tels que ciments, cendres volants, liants, est mesurée, pour l'évaluation de leur surface de contact, à l'aide d'un indice Blaine, notamment selon la norme NBN EN 196-6.

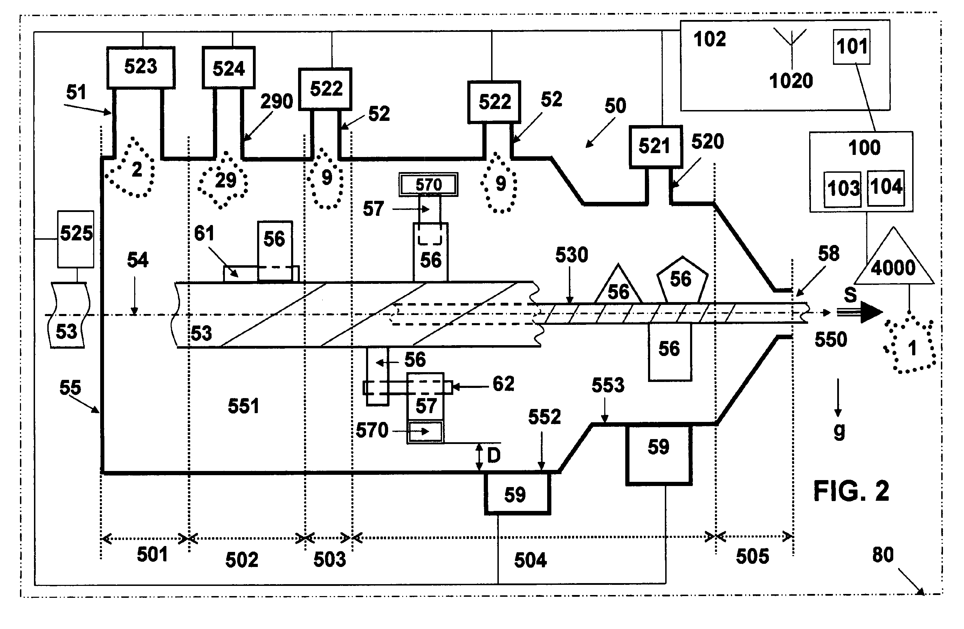

Une réaction physico-chimique, dite pouzzolanique, permet à plusieurs corps de s'agréger par agglomération de façon à obtenir un composé possédant d'autres propriétés, en particulier, une autre dureté et une autre résistance de grain, comparées à celles respectives des agrégats avant ladite réaction. Le terme «additif» utilisé dans la description et référencé 29 sur la figure 2 décrit toute matière additionnelle ajoutée à des matières premières alternatives (référencées 2 sur les figures) au cours du recyclage de ces derniers pour fabriquer des matériaux de construction de synthèse (référencés 1 sur les figures) présentant des propriétés sélectives prédéterminées. Il doit être compris que les additifs 29 peuvent comprendre à la fois des additifs traditionnels (ciment, chaux) et/ou des divers autres composants de formulation. Ces derniers sont définis par leur potentiel pouzzolanique, par leur contenu d'oxyde, par leur contenu de métaux lourds, par leur contenu inorganique et/ou organique, comme illustré ci-après.

Les composants sont définis par leur potentiel pouzzolanique, leur contenu d'oxyde, leur contenu de métaux lourds, leur contenu inorganique et organique. On peut notamment distinguer :
- des composants pouzzolaniques dans un mélange des agrégats ;
- des composants oxydes, notamment d'aluminium, de calcium, de fer et de silicium, de sodium, de potassium, de magnésium, de titane, de zinc, d'étain ;
- des composants métaux lourds tels que le manganèse, l'arsenic, le béryllium, le cadmium, le baryum, le plomb, le bore, le chrome, le cuivre, le nickel, le sélénium, le vanadium, le thallium, le strontium ;
- des composants chimiquement agressifs tels que chlorures, cyanures, phosphore, soufre et sulfates.

Les additifs remplissent des fonctions différentes de celles des composants, et notamment pour modifier la solubilité des composants et/ou leur immobilisation, le besoin d'eau des composants dans le mélange, ou encore entraîner l'air.

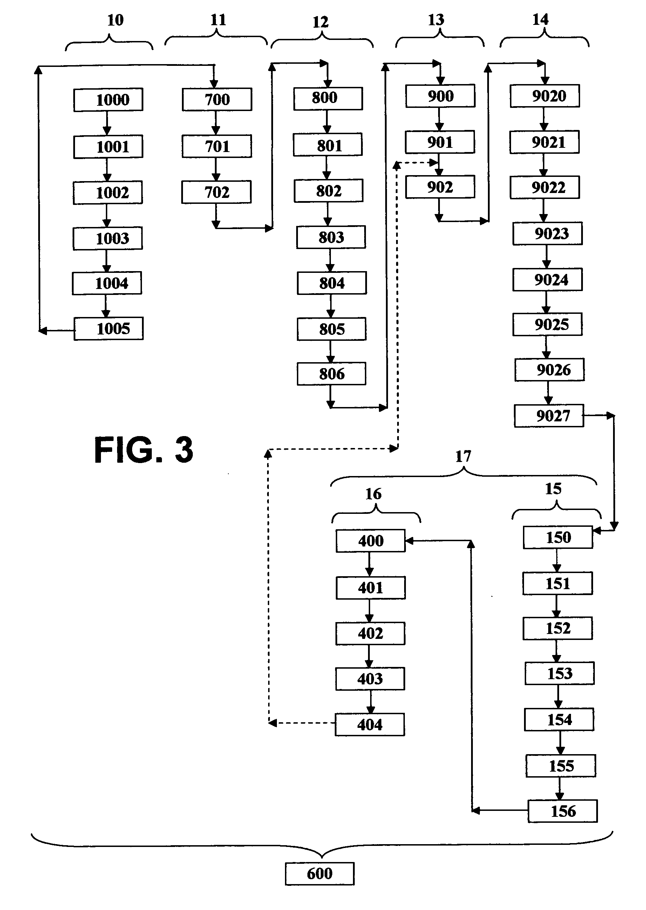

Les figures 1 et 2 présentent schématiquement un dispositif de fabrication 4, par exemple, une chaîne de production modulaire installée sur un site de fabrication, pour la mise en oeuvre du procédé de fabrication de matériaux de construction de synthèse 1 par recyclage de matières premières alternatives 2, illustré à son tour sur la figure 3. La modularité de la chaîne de production signifie que tout ou partie de ses constituants peut être actionnée de manière combinée ou séparée lors du recyclage de matières premières alternatives 2 en matériaux de construction de synthèse 1.

Le dispositif de fabrication 4 comprend au moins un réacteur 80 comportant :
- au moins un granulateur 50 comportant des moyens de régulation ;
- un organe de pilotage comportant au moins un calculateur 102, de préférence, muni d'une unité centrale de traitement dite CPU, notamment multitâches, et des moyens de mémorisation 101 conçu pour enregistrer de données et/ou d'informations relatives, par exemple, aux additifs (composants, additifs), aux matériaux de synthèse obtenus, ou aux étapes du fonctionnement du dispositif de fabrication ;
- au moins un premier appareil de mesure 100 en temps réel d'au moins un des constituants du matériau de construction de synthèse 1.

Ainsi, il est possible de fabriquer, avec un rendement satisfaisant, des matériaux de construction de synthèse 1 avec des propriétés structurelles, mécaniques, physiques, chimiques, prédéterminées à partir des matières premières alternatives 2, par exemple, à partir de déchets et/ou des résidus minerais. Ces matières premières alternatives 2, qui se substituent alors au moins partiellement à des matières premières conventionnelles non renouvelables de construction, à savoir, au sable, aux granulés, à la ponce, aux granulats légers industriels par exemple à l'argile expansé, au ciment. Comparées aux matières premières conventionnelles, les matières premières alternatives 2 présentent avantageusement :
- une densité moindre, permettant un abaissement des coûts de transport,
- une granulométrie similaire à celle décrite à l'aide de la courbe de Fuller idéale, permettant la meilleure maniabilité tout en garantissant des propriétés mécaniques optimisées,
- un potentiel pouzzolanique et de réactivité chimique plus élevés, en raison du contenu en CaS₃, CaS₂, CAF₄ et CaO, préférentiellement d'au moins 3% de la masse totale des matières premières alternatives 2, et qui contribuent à une meilleure agrégation, lors d'une granulation avec des couches fines interactives, avec d'autres additifs 29 (composants, additifs tels que ciment et/ou chaux). Cela permet notamment de fabriquer des bétons hydrauliques de performances élevées, notamment de résistance supérieure à 45 Mpa ;
- une porosité plus élevée, permettant d'assurer des performances en terme d'isolation supérieures, avec une valeur λ supérieure à 0,15 W/mK.

L'invention procure encore l'avantage d'utiliser des matières premières alternatives 2, déchets et/ou résidus minerais, à proximité de leur lieu de production, de minimiser leur transport, et d'économiser les frais de leur mise en décharge.

Dans une variante préférée de réalisation, l'organe de pilotage comporte au moins un interface homme-machine non représenté sur les figures tel qu'un lecteur d'un moyen de mémorisation amovible, des moyens de commande tels qu'un joystick ou un clavier, des moyens de communication tels qu'un microphone et un haut parleur, ainsi que éventuellement des moyens logiciels correspondant, y compris ceux permettant une reconnaissance vocale des commandes et/ou une synthèse de la voix.

De ce fait, une communication entre un opérateur et l'organe de pilotage est aisée.

Tel que visible sur la figure 2, les moyens de régulation du granulateur 50 comportent de préférence:
- au moins un premier moyen d'alimentation 523 du granulateur 50 en matières premières alternatives 2 ;
- au moins un deuxième moyen d'alimentation 522 du granulateur 50 en eau 9,
- au moins un moyen d'entraînement 525 du granulateur 50.

Le granulateur 50 presente un axe d'allongement longitudional 54 orienté de gauche à droite dans un sens d'une flèche S sur la figure 2., De préference, l'axe d'allongement 54 est disposé dans un plan horizontale, perpendiculairement à la pesanteur g. Le granulateur 50 t comporte au moins un stator 55 (partie immobile) et au moins un rotor 53, coaxiaux par rapport à l'axe 54.

Le stator 55 présente une cavité formée par une chambre interne 551 qui comporte le long de l'axe d'allongement 54 :
- au moins une zone d'introduction 501 comprenant une première extrémité 51 liée avec le premier moyen d'alimentation 523 pour recevoir les matières premières alternatives 2,
- au moins une zone d'humidification 503 comprenant au moins un premier point 52 d'introduction d'eau 9 lié avec le deuxième moyen d'alimentation 522 pour humidifier les matières premières alternatives 2,
- au moins une zone de sortie 505 comprenant une deuxième extrémité 58 pour délivrer un matériau de construction de synthèse 1 à l'extérieur 550 du stator 55.

Le rotor 53 présente une forme, de préférence, allongée hélicoïdale avec un pas longitudinal (selon l'axe d'allongement 54) de vis, qui peut être régulier ou non. Le rotor 53 peut présenter un axe de rotation 540 au moins parallèle à l'axe d'allongement 54. L'axe de rotation 540 peut être disposé dans le plan horizontal de l'axe d'allongement 54. Le rotor 53 est au moins partiellement enfermé libre en rotation (par exemple, sur lui-même autour de l'axe de rotation 540) dans la chambre interne 551 du stator 55. Le rotor 53 peut comprendre au moins une pale 56 de malaxage liée avec le rotor 53. De préférence, le rotor 53 comprend au moins deux pales 56 de malaxage, lesdites pales 56 étant axialement distantes et radialement espacées l'une de l'autre. Le rotor 53 est entraîné en rotation (par exemple, sur lui-même autour de l'axe de rotation 540) par le moyen d'entraînement 525. Grâce à ces agencements, on peut réguler avec précision tout apport en matières premières alternatives 2, en eau 9, et en énergie 19, dans le stator 55. Tout particulièrement une partie de cette énergie est de l'énergie mécanique fournie par le rotor 53 dans son mouvement de rotation.

Dans la variante de réalisation illustrée sur la figure 2, l'axe de rotation 540 du roteur 53 coincide avec l'axe d'allongement 54 du stator 55. Dans ce cas, le rotor 53 et le stator 55 sont donc coaxiaux.

Ces agencements contribuent à rendre le granulateur 50 plus compact.

Dans une autre variante de réalisation ((non représentée sur les figures), le granulateur 50 peut comprendre au moins deux rotors présentant des axes de rotation, par exemple, parallèles à l'axe d'allongement 54, en particulier, disposés dans le plan horizontal de l'axe d'allongement 54 de part et d'autre par rapport de l'axe d'allongement 54.

La présence de plusieurs rotors parallèles les uns aux autres permet de fournir davantage de l'énergie mécanique dans la chambre interne 551 du stator 55.

De préférence, le stator 55(et, en particulier, la chambre interne 551) comporte au moins une zone de granulation 504 pour produire une réaction d'agglomération, la zone de granulation 504 étant disposée axialement (par rapport à l'axe d'allongement 54) entre la zone d'humidification 503 et la zone de sortie 505. Les moyens de régulation du granulateur 50 peuvent comprendre au moins un moyen de régulation thermique 59, comprenant, par exemple, un thermomètre non représenté lié avec le stator 55 pour réguler la température dans la chambre interne 551 au moins dans sa zone de granulation 504.

Ainsi le dispositif de fabrication 4 selon l'invention permet de fabriquer, à façon, des matériaux de construction de synthèse 1, à l'aide de matières premières alternatives 2 avec une consommation d'énergie 19, qui est plus faible que lorsque la fabrication des matériaux de construction de synthèse 1 s'opère à l'aide des matières premières traditionnelles. Cela est favorable à l'environnement.

L'énergie 19 peut être amenée dans la chambre interne 551 par le moyen de régulation thermique 59 de différentes façons, par exemple, par un chauffage d'appoint, y compris à l'aide des micro-ondes. Lorsque la réaction chimique et/ou pouzzolanique qui se produit dans le stator 55 est exothermique, le moyen de régulation thermique 59 peut être agencé pour refroidir la chambre interne 551 du stator 55, en prélevant une partie de chaleur dégagée et en la transportant à l'extérieur 550 du stator 55. Enfin, le moyen de régulation thermique 59 permet de conduire, par exemple, à l'aide de thermomètres espacés radialement et axialement dans la chambre interne 551, une régulation volumique de température, et donc une régulation de vitesse de réaction pouzzolanique et/ou chimique, dans les différentes zones du granulateur 50, et de transmettre des données représentatives de cette régulation au calculateur 102.

De préférence, au moins l'une des pales 56 de malaxage comporte un premier moyen de réglage et de fixation 61 pour définir un positionnement sélectif, par exemple, axial et/ou radial, de ladite pale 56 par rapport au rotor 53. Ceci rend possible le contrôle précis d'un transport axial (le long de l'axe d'allongement 54) de masse par le rotor 53 à l'intérieur du stator 55 dans le sens de la flèche S(de l'amont vers l'aval de la chambre interne 551).Cette géométrie variable des pales 56 permet en effet une adaptation de la géométrie du rotor 53 au cas d'espèce, que ne permettrait pas un rotor de géométrie figée tel qu'une vis sans fin. Plus généralement, la forme de la pale 56 et son positionnement sélectif conditionnent également l'apport d'énergie mécanique qui influence la transformation des matières premières alternatives 2 dans la chambre interne 551.

De préférence, au moins l'une des pales 56 de malaxage comporte au moins une palette 57 amovible.

La présence des palettes 57 contribue fortement au contrôle du transport axial (le long de l'axe d'allongement 54) de la masse à l'intérieur du stator 55 dans le sens de la flèche S et, in fine, dans le contrôle de l'énergie 19 transmise aux matières premières alternatives 2 au cours de leur transformation pendant leur déplacement axial dans la chambre interne 551 du stator 55 suite à une poussée du rotor 53. Le fait que la palette 57 est amovible permet de faciliter l'entretien du granulateur 50, notamment lors de son nettoyage périodique. Enfin, la palette 57 étant amovible, on peut utiliser des palettes 57 fabriquées en matériaux différents, choisis en fonction des caractéristiques du matériau de construction de synthèse 1 à obtenir. Il est à noter qu'un un choix inapproprié du matériau constitutif des palettes 57 peut provoquer un blocage du rotor 53, conduisant à l'arrêt du fonctionnement du dispositif de fabrication 4, une perte de sa charge et un long nettoyage avant une nouvelle remise en service.

De préférence, la palette 57 comporte un deuxième moyen de réglage et de fixation 62 conçu pour autoriser son positionnement radial sélectif par rapport à la pale 56.

Grâce à ces agencements, il est possible de modifier, par exemple, localement, une quantité d'énergie 19 amenée dans un endroit donné dans la chambre interne 551.

De préférence, la palette 57 comporte à son extrémité orientée vers le stator 55 une tête 570 en matériau céramique ou en alliage métallique. De ce fait, les palettes 57, et notamment leurs extrémités orientées vers le stator 55, ne sont pas corrodées malgré des contraintes mécaniques, thermiques et chimiques dans la chambre interne 551. L'absence de corrosion contribue non seulement à allonger la durée de vie du granulateur 50, mais également permet d'éviter toute pénétration inopinée de particules solides, issues d'effritement corrosif des palettes 57, qui pourrait influencer la réaction chimique et/ou pouzzolanique dans la chambre interne 551.

De préférence, la palette 57 est disposée dans la zone de granulation 504. Ainsi, il est possible de préserver la zone de granulation 504, qui est la plus active chimiquement, d'une telle pénétration de particules. D'autres avantages liés aux palettes 57 sont une introduction d'énergie plus intensive, surtout une concentration locale (axiale le long de l'axe d'allongement 54 et/ou radiale) d'énergie avec une distance optimisée entre les palettes 57 et le stator 55, et l'obtention de l'agglomération de couches plus fines des granulats. De préférence, au moins dans la zone de granulation 504, le stator 55 comprend au moins deux étages 552, 553 de dimensions radiales différentes. Cette disposition permet de réguler la pression dans les différentes zones 501, 502, 503, 504, 505 de la chambre interne 551.

De préférence, le granulateur 50 comprend au moins deux rotors 53, 530 de dimensions radiales différentes, par exemple, disposés axialement libres en rotation l'un par rapport à l'autre et présentant chacun un pas, selon lequel sont agencées les pales 56, régulier ou non, qui lui est propre. Cela permet de mieux réguler la quantité d'énergie 19 amenée mécaniquement par les rotors 53, 530, dans les différentes zones 501, 502, 503, 504, 505 de la chambre interne 551. Comme illustré sur la figure 2, les rotors 53, 530 peuvent être coaxiaux, ce qui permet de minimiser les dimensions, notamment radiales, de la chambre interne 551 et, donc, du stator 55.

De préférence, les moyens de régulation du granulateur 50 comprennent au moins un moyen de dépressurisation 521 du stator 55. Au moins dans la zone de granulation 504, le stator 55 peut comprendre au moins une ouverture 520 liée avec le moyen de dépressurisation 521. Ce dernier permet de réguler la pression, jusqu'au vide, dans la chambre interne 551, et d'évacuer des gaz pouvant se produire dans la zone de granulation 504 au cours des réactions chimiques et/ou pouzzolaniques.

De préférence, la chambre interne 551 du stator 55 comporte au moins une zone d'homogénéisation 502 pour homogénéiser les matières premières alternatives 2, et qui est disposée axialement (le long de l'axe d'allongement 54) entre la zone d'introduction 501 et la zone d'humidification 503. Les moyens de régulation du granulateur 50 peuvent comprendre au moins un troisième moyen d'alimentation 524 du granulateur 50 en additifs 29 (par exemple, en adjuvants), et le stator 55 peut comprendre au moins un deuxième point 290 d'introduction d'additifs 29 lié avec le troisième moyen d'alimentation 524.

De ce fait, les matières premières alternatives 2 peuvent être prétraitées axialement en amont de la zone de granulation 504. Par exemple, les tailles des morceaux de matières premières alternatives 2 introduits dans le stator 55 peuvent être homogénéisées par malaxage sous l'action des pales 56 dans la zone d'introduction 501. De même, les additifs 29 peuvent être ajoutés aux matières premières alternatives 2. De ce fait, il est possible d'influencer les réactions chimiques et/ou pouzzolaniques dans la chambre interne 551 et, in fine, de contribuer à la qualité invariable du matériau de construction de synthèse 1 fabriqué par le granulateur 50 quel que soit un taux d'hétérogénéité intrinsèque initial des matières premières alternatives 2.

De préférence, le stator 55 comporte au moins deux premiers points 52, 52A, d'introduction d'eau 9 axialement distantes et radialement espacés l'un de l'autre. Cette disposition permet de contrôler de manière précise, à la fois axialement et radialement, la quantité d'eau 9 dans la chambre interne 551, et donc, un niveau particulier de réactions chimiques et/ou pouzzolaniques dans le granulateur 50. Grâce à ces agencements, le dispositif de fabrication 4 peut recevoir et homogénéiser dans un temps limité, de l'ordre de 1,5 à 3 minutes, de l'eau 9, jusqu'à 20% de la masse du mélange « matières premières alternatives 2 + eau 9 ». Cette capacité du dispositif de fabrication 4 de supporter un pourcentage aussi élevé en eau 9 sans perte de qualité permet de fabriquer des matériaux de construction de synthèse 1 présentant une vaste gamme de propriétés structurelles, mécaniques, physiques et chimiques.

De préférence, le stator 55 a une symétrie de révolution et comporte des tronçons cylindriques (l'axe d'allongement 54 pouvant être confondu avec un axe de symétrie correspondant).

Il est ainsi possible d'obtenir un milieu réactif, comprenant les matières premières alternatives 2, les additifs 29, et l'eau 9, qui est plus homogène tant axialement que radialement dans la chambre interne 551.

De préférence, le dispositif de fabrication 4 comprend :
- des premiers moyens de prélèvement 4000 pour prélever au moins un échantillon représentatif du matériau de construction de synthèse 1,
- des moyens de réception 1100 pour recevoir au moins un lot de matières premières alternatives 2,
- des deuxièmes moyens de prélèvement 1101 pour prélever au moins un échantillon représentatif de ce lot,
- au moins un deuxième appareil de mesure 1102 en temps réel pour mesurer au moins un des paramètres de l'échantillon prélevé du lot,
- des moyens de télétransmission 1020 liés avec le calculateur 102 pour recevoir et transmettre des données,
- des moyens de pesage 8105 pour peser au moins les matières premières alternatives 2,
- des moyens de préparation 8106 pour préparer au moins les additifs 29,
- des moyens de convoyage 8107 pour transporter au moins les matières premières alternatives 2.

Les moyens de télétransmission 1020 peuvent comprendre une interface de communication sans fil, par exemple, une interface de communication radio compatible avec des réseaux de télécommunication terrestre, par exemple, ceux utilisant des technologies « GSM » et/ou « UMTS », et/ou satellitaire, ou similaire.

De préférence, l'un au moins parmi le premier 100 et le deuxième 1102 appareils de mesure comporte :
- au moins un dispositif 103 pour mesurer un taux d'humidité de l'échantillon,
- au moins un dispositif 104 pour mesurer une distribution de tailles des particules granulées,
- au moins un dispositif 105 pour mesurer la densité.

De préférence, le premier 100 et le deuxième 1102 appareils de mesure peuvent être confondus. De même, les premiers 4000 et les deuxièmes 1101 moyens de prélèvement peuvent être confondus. Le dispositif de fabrication 4 peut alors être plus compact, et son coût abaissé.

Le fonctionnement du dispositif de fabrication 4 décrit précédemment est illustré à l'aide d'un exemple d'un mode du procédé de granulation selon l'invention schématisé tel que visible sur les figures 2 et 3.

Comme cela est visible sur la figure 3, le procédé de granulation selon l'invention est modulaire. Cela signifie que les étapes du procédé de granulation peuvent être groupées en plusieurs blocs, notamment en six blocs référencés respectivement 10, 11, 12, 13, 14, 17 dans un exemple préféré de mise en oeuvre de l'invention, qui peuvent être activés de manière combinée ou séparée lors de la fabrication du matériau de construction de synthèse 1 en fonction des tâches et/ou des besoins spécifiques de l'organe de pilotage, éventuellement assisté par une station 5 de contrôle distant et/ou par l'opérateur, par exemple, de manière distante ou directement sur le site de fabrication.

Le bloc 10 porte sur des étapes préparatoires, dites d'amont, de réception, de prélèvement, d'analyse et de qualification des matières premières alternatives 2 arrivant sur le site de fabrication.

Le bloc 11 porte sur des étapes préparatoires de sélection des additifs locale (axiale le long de l'axe d'allongement 54 et/ou radiale) 29, en particulier, des adjuvants.

Le bloc 12 porte sur des étapes de formulation chimique des matériaux de construction de synthèse 1 en partie concernant un pourcentage relatif entre les matières premières alternatives 2 et les additifs 29 à mettre dans le réacteur 80.

Le bloc 13 porte sur des étapes de formulation des matériaux de construction de synthèse 1 en partie concernant des besoins en eau 9 et en énergie 19 à amener dans le réacteur 80.

Le bloc 14 est propre aux étapes de détermination des paramètres physiques de conduite du procédé de granulation selon l'invention traduite en régulation des moyens de réglage du granulateur 50.

Le bloc 17 englobe, d'une part, un premier demi-bloc 15 des étapes de transformation proprement dite des matières premières alternatives 2 dans le granulateur 50, et, d'autre part, un deuxième demi-bloc 16 des étapes de contrôle de qualité du matériau de construction de synthèse 1 fabriqué par le granulateur 50.

Le bloc 17 comprend les étapes suivantes consistant à :
- en une étape 15, transformer les matières premières alternatives 2, à l'aide d'au moins un réacteur 80 comportant au moins un granulateur 50, en un matériau de construction de synthèse 1,
- en une étape 16, effectuer les contrôles de qualité consistant :
   - en une étape 400, à prélever à l'aide des premiers moyens de prélèvement 4000 un échantillon représentatif du matériau de construction de synthèse 1,
   - en une étape 401, à réaliser en temps réel, à l'aide d'au moins un premier appareil 100 de mesure, une première mesure en analysant au moins un constituant, dit premier constituant, de l'échantillon prélevé du matériau de construction de synthèse 1,
   - en une étape 402, à comparer la première mesure avec au moins une première valeur seuil propre au premier constituant, qui a été préalablement mémorisée à l'aide des moyens de mémorisation 101, en attribuant à la première mesure au moins un premier niveau de priorité prédéterminé,
   - en une étape 403, à définir à l'aide d'au moins un calculateur 102 au moins une première consigne de régulation pour une mise à jour de régulation des moyens de régulation du granulateur 50, en appliquant au moins une première règle prédéterminée préalablement mémorisée à l'aide des moyens de mémorisation 101, la première règle prédéterminée étant propre au premier niveau de priorité de la première mesure.

Du fait de ce mode de fonctionnement, le contrôle de qualité peut être continu ou discret, par exemple à au moins une fréquence prédéterminée, pendant le fonctionnement du dispositif de fabrication 4. Les étapes du bloc 17, et, en particulier, celles du deuxième demi-bloc 16, sont essentielles pour un maintien, par exemple, en temps réel, d'un niveau de qualité constant, et, donc, d'un rendement satisfaisant, du matériau de construction de synthèse 1 fabriqué par le granulateur 50, quelle que soit la variabilité des matières premières alternatives 2, en particulier, celle de déchets et/ou des résidus minerais.

De préférence, le deuxième demi-bloc 16 comprend une étape 404, qui consiste à ordonner par le calculateur 102, en fonction du premier niveau de priorité prédéterminé attribué à la première mesure, la réalisation en temps réel d'au moins une première mesure additionnelle par l'analyse d'au moins un autre constituant, dit deuxième constituant, du matériau de construction de synthèse 1.

Ainsi, l'efficacité du contrôle de qualité est renforcée grâce à la première mesure additionnelle.

De préférence, le premier constituant en question est l'eau 9, et le premier appareil de mesure 100 comprend au moins un dispositif 103 mesurant le taux d'humidité résiduel dans le matériau de construction de synthèse 1.

Cela contribue à permettre la fabrication d'une composition pouzzolanique optimale, en permettant un contrôle fin de la quantité d'eau 9 dans la chambre interne 551, ou, plus exactement, de la suffisance de l'eau 9 pour la transformation satisfaisante, c'est-à-dire répondant aux normes de qualité imposées au préalable, de la matière première alternative 2. Ce contrôle fin est d'autant plus utile que le besoin en humidification n'est pas linéaire au cours de la réaction de transformation. En effet, il peut varier selon la phase, soit d'initiation de la réaction, soit de son entretien. Une mauvaise humidification peut être à l'origine de problèmes de qualité du produit fini tel que le matériau de construction de synthèse 1. De manière générale, une agglomération réussie, due à une réaction pouzzolanique optimale, dépend essentiellement du contrôle de l'eau au niveau des différents composants, ainsi qu'au cours de la réaction. Elle dépend encore du contrôle de l'énergie, et des différentes réactions chimiques et physico-chimiques. Seule la combinaison en fonction d'une teneur en eau 9 précise, de préférence maîtrisée à moins de 0,1%, peut permettre d'obtenir la composition pouzzolanique optimale, c'est-à-dire, fortement agrégée, avec une granulométrie entre 0,6 mm et 4 mm, et de solidité élevée, avec une résistance de grain au minimum de 15 MPa.

De préférence, le deuxième constituant analysé est formé par des particules granulées issues du matériau de construction de synthèse 1, et le premier appareil de mesure 100 comprend au moins un dispositif 104 mesurant une distribution de tailles des particules granulées dans le matériau de construction de synthèse 1. Il est ainsi possible d'évaluer finement les dimensions des constituants du matériau de construction de synthèse 1. La taille des granulats du matériau de construction de synthèse 1 obtenus dépend essentiellement, toutes choses égales par ailleurs, de l'énergie 19 apportée, notamment mécaniquement, par le rotor 53, à la réaction de transformation des matières premières alternatives 2. Or, comme pour l'humidification, le besoin d'énergie n'est pas linéaire au cours de la réaction et peut être une des sources de problèmes de qualité du produit fini 1. De ce fait, un contrôle fin de la taille des granulats permet de contribuer à la maîtrise de l'énergie 19 apportée dans la réaction. A titre d'exemple, si l'on apporte trop d'énergie, par exemple dans le cas d'une vitesse de rotation du rotor 53 supérieure à 140 tours par minute, on produit trop de petits granulats, 80% des granulats présentant des tailles au-dessous de 2 mm. Si l'on apporte trop peu d'énergie, par exemple, dans le cas d'une vitesse de rotation du rotor 53 inférieure à 40 tours par min, on produit trop de gros granulats, 80% des granulats présentant des tailles au-dessus de 4 mm de diamètre.

Le bloc 10 comprend des étapes suivantes consistant:
- en une étape 1000, à recevoir, à l'aide des moyens de réception 1100 un lot des matières premières alternatives 2,
- en une étape 1001, à prélever, à l'aide des deuxième moyens de prélèvement 1101, un échantillon représentatif du lot,
- en une étape 1002, à réaliser en temps réel, à l'aide d'au moins un deuxième appareil 1102 de mesure, une deuxième mesure en analysant au moins un premier paramètre représentatif de l'échantillon prélevé du lot,
- en une étape 1003, à comparer la deuxième mesure avec au moins une deuxième valeur seuil, qui est propre au premier paramètre préalablement mémorisée à l'aide des moyens de mémorisation 101, en attribuant à la deuxième mesure au moins un deuxième niveau de priorité prédéterminé.

Grâce à ce mode de fonctionnement, il est possible de qualifier les matières premières alternatives 2 arrivant sur le site de fabrication à l'aide de la deuxième mesure pour permettre une formulation plus précise des mélanges « matières premières alternatives 2 + additifs 29 + eau 9 + énergie 19 » en vue d'obtenir le matériau de construction de synthèse 1 avec des propriétés prédéterminées.

De préférence, le bloc 10 comprend une étape 1004 consistant à ordonner, par le calculateur 102, en fonction du deuxième niveau de priorité prédéterminé attribué à la deuxième mesure, la réalisation en temps réel d'au moins une deuxième mesure additionnelle en analysant au moins un autre paramètre représentatif, dit deuxième paramètre, de l'échantillon prélevé du lot

Grâce à ce mode de fonctionnement, il est possible, à l'aide de la deuxième mesure additionnelle, de qualifier davantage et, donc de contrôler davantage, la qualité des matières premières alternatives 2 reçues sur le site de production.

De préférence, le bloc 10 comprend une étape 1005 consistant à ordonner par le calculateur 102, en fonction du deuxième niveau de priorité prédéterminé attribué à la deuxième mesure, la réalisation en temps réel d'au moins une autre deuxième mesure additionnelle en analysant au moins un autre paramètre représentatif, dit troisième paramètre, de l'échantillon prélevé du lot. Grâce à ce mode de fonctionnement, il est possible, à l'aide de l'autre deuxième mesure additionnelle, de qualifier davantage et, donc de contrôler davantage, la qualité des matières premières alternatives 2 reçues sur le site de production.

De préférence, le premier paramètre est le taux d'humidité, et le deuxième appareil 1102 de mesure comprend au moins un dispositif 103 mesurant un taux d'humidité dans l'échantillon prélevé du lot

Les déchets ou résidus-minerais 2 utilisés peuvent contenir de l'eau 9, qui peut suffire à la réaction, ou aussi être en excès, ce qui peut être préjudiciable, par la formation de cristaux non stables dans le temps, avec notamment des phénomènes de retrait Si l'eau 9 est en quantité insuffisante, il est impossible de fabriquer les cristaux souhaités, et il faut apporter à la réaction la juste quantité complémentaire. Les agencements ci-dessus contribuent à rendre plus aisée la quantification, et le contrôle de qualité correspondant, de l'humidification initiale, laquelle est variable en fonction du temps et donc délicate à mesurer.

De préférence, le deuxième paramètre est la taille des particules granulées, et le deuxième appareil 1102 de mesure comprend au moins un dispositif 104 mesurant une distribution de tailles des particules granulées dans l'échantillon prélevé du lot

Cela permet de qualifier la finesse des particules dans l'échantillon prélevé du lot, par exemple, à l'aide de l'indice Blaine afin d'évaluer leur réactivité à l'eau 9, qui est d'autant meilleure que l'indice Blaine est élevé.

De préférence, le troisième paramètre est une densité, et le deuxième appareil 1102 de mesure comprend au moins un dispositif 105 mesurant la densité de l'échantillon prélevé du lot

Cet agencement contribue à qualifier et à contrôler davantage les matières premières alternatives 2, et à permettre de prévoir leur réactivité avec les additifs 29 (en particulier, les adjuvants), étant entendu que les densités des différentes matières premières alternatives 2 sont assez différenciées, de l'ordre de 0,4 à 2.3 (kg/m³) pour des résidus-minerais.

Optionnellement, le troisième paramètre peut aussi être une résistance à la pression et le deuxième appareil 1102 de mesure comprend alors au moins un dispositif non illustré mesurant cette résistance.

Grâce à cet agencement, il est possible de déterminer et de contrôler la résistance à la pression, qui constitue un des facteurs importants pour la réussite de l'opération de granulation, et pour l'employabilité des matériaux de construction de synthèse 1 obtenus à l'issue de la réaction. Il est à noter que l'étape de comparaison 1003 du bloc 10 évoqué ci-dessus et faisant appel à au moins la deuxième valeur seuil fait appel à une base de données 3, par exemple distante, sous forme d'une bibliothèque constituée au préalable et réunissant un nombre des valeurs théoriques et pratiques, chimiques et physiques, notamment relatives au taux d'humidité des matières premières alternatives 2, qui sont ensuite utilisées pour constituer des valeurs seuil correspondantes.

Le bloc 11 comprend des étapes suivantes consistant:
- en une étape 700 à recevoir, à l'aide des moyens de télétransmission 1020, au moins des caractéristiques représentatives de la structure d'un matériau de construction de référence, dites caractéristiques de référence 7,
- en une étape 701 à mémoriser, à l'aide des moyens de mémorisation 101, les caractéristiques de référence 7,
- en une étape 702 à sélectionner, par le calculateur 102, des additifs 29 de propriétés physicochimiques préalablement mémorisées à l'aide des moyens de mémorisation 101, à ajouter dans les matières premières alternatives 2 pour fabriquer, à l'aide du granulateur 50, le matériau de construction de synthèse 1 présentant des caractéristiques identiques à celles de référence 7.

Grâce à ce mode de fonctionnement, il est possible de choisir de manière sélective, c'est-à-dire en fonction, entre autres, de la qualification des matières premières alternatives 2, les différents additifs 29 nécessaires pour permettre la fabrication du matériau de construction de synthèse 1 conforme à celui de référence. Ces additifs 29 peuvent notamment comprendre les adjuvants tels que, le ciment ou alternativement la chaux. Le besoin en additifs 29 s'explique notamment par l'existence de propriétés disparates des matières premières alternatives 2, qui peuvent présenter, par exemple, une valeur trop insuffisante de certains paramètres, par exemple une quantité des composants puzzolanique inférieure à 7 %, ou, à l'inverse, trop élevée, par exemple, un taux d'humidité supérieur à 18%.

De préférence, le bloc 12 comprend une étape 800 consistant à définir, à l'aide du calculateur 102, au moins un pourcentage relatif entre les matières premières alternatives 2 et les additifs 29 sélectionnés pour fabriquer le matériau de construction de synthèse 1 à l'aide du granulateur 50, en appliquant au moins une deuxième règle prédéterminée préalablement mémorisée à l'aide des moyens de mémorisation 101, la deuxième règle prédéterminée étant propre au deuxième niveau de priorité de la deuxième mesure.

Un exemple ci-après montre une importance des additifs 29 (en particulier, des adjuvants tels que le ciment ou la chaux), en illustrant ainsi les avantages procurés par le mode de fonctionnement ci-dessus. En effet, les densités sont de l'ordre de 3,1 pour le ciment, de l'ordre de 1.2 à 1.7 pour des résidus-minerais, et de 0,4 à 0,8 pour la chaux. Une composition adéquate des matières premières alternatives 2 et des additifs 29 (en particulier, des adjuvants) disponibles peut permettre, par exemple, d'obtenir des matériaux de construction de synthèse 1 d'une densité de 1,5 ou moins.

Le bloc 12 comprend des étapes suivantes consistant:
- en une étape 801, à comparer à l'aide du calculateur 102 la deuxième mesure additionnelle avec au moins une troisième valeur seuil propre au deuxième paramètre préalablement mémorisée à l'aide des moyens de mémorisation 101 en attribuant à ladite deuxième mesure additionnelle au moins un troisième niveau de priorité prédéterminé,
- en une étape 802 à définir, à l'aide du calculateur 102, au moins un premier indice de correction du pourcentage relatif entre les matières premières alternatives 2 et les adjuvants 29 sélectionnés en appliquant au moins une troisième règle prédéterminée préalablement mémorisée à l'aide des moyens de mémorisation 101, la troisième règle prédéterminée étant propre au troisième niveau de priorité de ladite deuxième mesure additionnelle.

De préférence, le bloc 12 comprend encore des étapes suivantes consistant:
- en une étape 803 à comparer, à l'aide du calculateur 102, l'autre deuxième mesure additionnelle avec au moins une quatrième valeur seuil propre au troisième paramètre préalablement mémorisée à l'aide des moyens de mémorisation 101 en attribuant à ladite autre deuxième mesure additionnelle au moins un quatrième niveau de priorité prédéterminé,
- en une étape 804 à définir, à l'aide du calculateur 102, au moins un second indice de correction du pourcentage relatif entre les matières premières alternatives 2 et les additifs 29 sélectionnés en appliquant au moins une quatrième règle prédéterminée préalablement mémorisée à l'aide des moyens de mémorisation 101, la quatrième règle prédéterminée étant propre au quatrième niveau de priorité de ladite autre deuxième mesure additionnelle.

Il est à noter que les étapes de comparaison 801 et 803 du bloc 12 évoquées ci-dessus et faisant appel à au moins la troisième et quatrième valeurs seuil, font appel à une base de données 8, par exemple distante, constituée préalablement et réunissant une bibliothèque de valeurs théoriques et pratiques, tant chimiques que physiques, par exemple du taux d'humidité des matières premières alternatives 2, des additifs 29, des matériaux de construction de référence qui sont ensuite utilisés pour former les dites valeurs seuil correspondantes.

Le bloc 12 comprend des étapes suivantes consistant:
- en une étape 805, à peser, à l'aide des moyens de pesage 8105 les matières premières alternatives 2,
- en une étape 806, à préparer, à l'aide des moyens de préparation 8106, les additifs 29.

Le bloc 13 comprend des étapes suivantes consistant:
- en une étape 900 à définir, à l'aide du calculateur 102, un premier besoin en énergie 19 pour fabriquer, à partir dudit pourcentage relatif entre les matières premières alternatives 2 et les additifs 29 sélectionnés, le matériau de construction de synthèse 1 à l'aide du granulateur 50,
- en une étape 901 à définir, à l'aide du calculateur 102, un deuxième besoin en eau 9 pour fabriquer, à partir dudit pourcentage relatif entre les matières premières alternatives 2 et les additifs 29 sélectionnés, le matériau de construction de synthèse 1 à l'aide du granulateur 50 en appliquant au moins une cinquième règle prédéterminée préalablement mémorisée à l'aide des moyens de mémorisation 101, la cinquième règle prédéterminée étant propre au deuxième niveau de priorité de la deuxième mesure,
- en une étape 902, à ordonner, par le calculateur 102, en fonction du premier besoin en énergie 19 et du deuxième besoin en eau 9, la régulation des moyens de régulation du granulateur 50.

Le bloc 14 comprend des étapes suivantes consistant:
- en une étape 9020 à réguler, à l'aide d'un premier moyen d'alimentation 523, une alimentation du granulateur 50 en matières premières alternatives 2,
- en une étape 9021 à réguler, à l'aide d'un deuxième moyen d'alimentation 522, une alimentation du granulateur 50 en eau 9,
- en une étape 9022 à réguler, à l'aide d'un moyen d'entraînement 525, une vitesse de rotation d'un rotor 53 du granulateur 50,
- en une étape 9023 à réguler, à l'aide d'un premier moyen de réglage et de fixation 61, un positionnement sélectif, notamment radial et/ou axial, d'au moins une pale 56 du rotor 53 par rapport au rotor 53,
- en une étape 9024, à réguler, à l'aide d'un deuxième moyen de réglage et de fixation 62, un positionnement radial sélectif d'au moins une palette 57 par rapport à une pale du rotor 53 qui supporte ladite palette 57,
- en une étape 9025 à réguler, à l'aide d'un moyen de dépressurisation 521, la pression dans la chambre interne 551,
- en une étape 9026 à réguler, à l'aide d'un troisième moyen d'alimentation 524, l'alimentation du granulateur 50 en additifs 29,
- en une étape 9027 à réguler, à l'aide d'au moins un moyen de régulation thermique 59, la température dans la chambre interne 551.

Il est à noter qu'un un mauvais réglage du positionnement sélectif des pales 56, par exemple lorsqu'elles sont axialement éloignées les unes des autres à des distances supérieures à 4 mm, peut provoquer un blocage du rotor 53 conduisant à l'arrêt du fonctionnement du dispositif de fabrication 4, une perte de sa charge et un long nettoyage avant une nouvelle remise en service.

Le premier demi bloc 15 comprend des étapes suivantes consistant:
- en une étape 150 à introduire, à l'aide du premier moyen d'alimentation 523, les matières premières alternatives 2 dans la chambre interne 551 dans une zone d'introduction 501 du granulateur 50,
- en une étape 151 à homogénéiser, à l'aide du rotor 53 entraîné en rotation autour d'un axe de rotation 54 par le moyen d'entraînement 525, les matières premières alternatives 2 avec les additifs 29 dans la chambre interne 551 dans une zone d'homogénéisation 502 du granulateur 50,
- en une étape 152 à humidifier, à l'aide du deuxième moyen d'alimentation 522, les matières premières alternatives 2 homogénéisées avec les additifs 29 dans la chambre interne 551 dans une zone d'humidification 503 du granulateur 50,
- en une étape 153 à granuler, à l'aide du rotor 53 entraîné en rotation autour de l'axe 54 par le moyen d'entraînement 525, les matières premières alternatives 2 avec les additifs 29 homogénéisés et humidifiés dans la chambre interne 551 dans une zone de granulation 504 du granulateur 50,
- en une étape 154, à optimiser, à l'aide du moyen de régulation thermique 59, la température dans la chambre interne 551 dans la zone de granulation 504 du granulateur 50, - en 155 à abaisser la pression, à l'aide du moyen de dépressurisation 521, dans la zone de granulation 504 du granulateur 50,
- en une étape 156 à délivrer, à l'aide du rotor 53 entraîné en rotation autour de l'axe 54 par le moyen d'entraînement 525, le matériau de construction de synthèse 1 à l'extérieur 550 du stator 55 dans une zone de sortie 505 du granulateur 50.

Enfin, le procédé de granulation selon l'invention peut comprendre une étape transversale, c'est-à-dire, pouvant être exécutée parallèlement avec n'importe quelle étape des blocs 10 à 17, et consistant à une étape de transmission 600, à l'aide des moyens de télétransmission 1020, d'au moins un signal représentatif d'un état du calculateur 102, chaque étape des blocs 10 à 17 présentant un état qui lui est propre, à la station 5 de contrôle distant.

## Revendications

1. Procédé de granulation pour la fabrication de matériaux de construction de synthèse (1) par recyclage de matières premières alternatives (2), **caractérisé en ce qu'**il comprend des étapes suivantes consistant à :
- transformer (15) lesdites matières premières alternatives (2) à l'aide d'au moins réacteur (80) comportant au moins un granulateur (50), en un matériau de construction de synthèse (1),
- prélever (400) à l'aide des premiers moyens de prélèvement (4000) un échantillon représentatif dudit matériau de construction de synthèse (1),
- réaliser (401) en temps réel à l'aide d'au moins un premier appareil (100) de mesure une première mesure en analysant au moins un premier constituant, du l'échantillon prélevé du matériau de construction de synthèse (1),
- comparer (402) ladite première mesure avec au moins une première valeur seuil propre audit premier constituant préalablement mémorisée à l'aide de moyens de mémorisation (101) en attribuant à ladite première mesure au moins un premier niveau de priorité prédéterminé,
- définir (403) à l'aide d'au moins un calculateur (102) au moins une première consigne de régulation pour une mise à jour de régulation de moyens de régulation du granulateur (50) en appliquant au moins une première règle prédéterminée préalablement mémorisée à l'aide desdits moyens de mémorisation (101), la première règle prédéterminée étant propre au premier niveau de priorité de la première mesure.

2. Procédé de granulation selon la revendication 1, **caractérisé en ce qu'**il comprend une étape consistant à ordonner (404) par le calculateur (102), en fonction du premier niveau de priorité prédéterminée attribué à la première mesure, la réalisation en temps réel d'au moins une première mesure additionnelle en analysant au moins un autre constituant, dit deuxième constituant, dudit matériau de construction de synthèse (1).

3. Procédé de granulation selon la revendication 1 ou 2, **caractérisé en ce que** ledit premier constituant est l'eau (9), et **en ce que** le premier appareil de mesure (100) comprend au moins un dispositif (103) mesurant un taux d'humidité résiduel dans ledit matériau de construction de synthèse (1).

4. Procédé de granulation selon la revendication 2 ou 3, **caractérisé en ce que** le deuxième constituant est formé par des particules granulées issues du matériau de construction de synthèse (1), et **en ce que** le premier appareil de mesure (100) comprend au moins un dispositif (104) mesurant une distribution de tailles des particules granulées dans le matériau de construction de synthèse (1).

5. Procédé de granulation selon l'une des revendications 1 à 4, **caractérisé en ce qu'**il comprend des étapes suivantes consistant à :
- recevoir (1000) à l'aide des moyens de réception (1100) un lot des matières premières alternatives (2),
- prélever (1001) à l'aide des deuxième moyens de prélèvement (1101) un échantillon représentatif du lot,
- réaliser (1002) en temps réel à l'aide d'au moins un deuxième appareil (1102) de mesure une deuxième mesure en analysant au moins un premier paramètre représentatif de l'échantillon prélevé du lot,
- comparer (1003) ladite deuxième mesure avec au moins une deuxième valeur seuil propre au premier paramètre préalablement mémorisée à l'aide des moyens de mémorisation (101) en attribuant à ladite deuxième mesure au moins un deuxième niveau de priorité prédéterminé.

6. Procédé de granulation selon la revendication 5, **caractérisé en ce qu'**il comprend une étape consistant à ordonner (1004) par le calculateur (102), en fonction du deuxième niveau de priorité prédéterminé attribué à la deuxième mesure, la réalisation en temps réel d'au moins une deuxième mesure additionnelle en analysant au moins un autre paramètre représentatif, dit deuxième paramètre, de l'échantillon prélevé du lot.

7. Procédé de granulation selon la revendication 5 ou 6, **caractérisé en ce qu'**il comprend une étape consistant à ordonner (1005) par le calculateur (102), en fonction du deuxième niveau de priorité prédéterminé attribué à la deuxième mesure, la réalisation en temps réel d'au moins une autre deuxième mesure additionnelle en analysant au moins un autre paramètre représentatif, dit troisième paramètre, de l'échantillon prélevé du lot.

8. Procédé de granulation selon l'une quelconque des revendications 5 à 7, **caractérisé en ce que** le premier paramètre est le taux d'humidité, et **en ce que** le deuxième appareil (1102) de mesure comprend au moins un dispositif (103) mesurant le taux d'humidité dans ledit échantillon prélevé du lot.

9. Procédé de granulation selon l'une quelconque des revendications 6 à 8, **caractérisé en ce que** le deuxième paramètre est la taille des particules granulées, et **en ce que** le deuxième appareil (1102) de mesure comprend au moins un dispositif (104) mesurant une distribution de tailles des particules granulées dans l'échantillon prélevé du lot.

10. Procédé de granulation selon l'une quelconque des revendications 7 à 9, **caractérisé en ce que** le troisième paramètre est la densité, et **en ce que** le deuxième appareil (1102) de mesure comprend au moins un dispositif (105) mesurant la densité de l'échantillon prélevé du lot.

11. Procédé de granulation selon l'une quelconque des revendications 5 à 10, **caractérisé en ce qu'**il comprend des étapes suivantes consistant à :
- recevoir (700) à l'aide de moyens de télétransmission (1020) au moins des caractéristiques représentatives de structure d'un matériau de construction de référence, dites caractéristiques de référence (7),
- mémoriser (701) à l'aide des moyens de mémorisation (101) lesdites caractéristiques de référence (7),
- sélectionner (702) par le calculateur (102) des additifs (29), de propriétés physicochimiques préalablement mémorisées à l'aide des moyens de mémorisation (101), à ajouter dans les matières premières alternatives (2) pour fabriquer à l'aide du granulateur (50) le matériau de construction de synthèse (1) présentant des caractéristiques identiques à celles de référence (7).

12. Procédé de granulation selon la revendication 11, **caractérisé en ce qu'**il comprend une étape (800) consistant à définir à l'aide du calculateur (102) au moins un pourcentage relatif entre les matières premières alternatives (2) et les additifs (29) sélectionnés pour fabriquer le matériau de constriction de synthèse (1) à l'aide du grenulateur (50) en appliquant au moins une deuxième règle prédéterminée préalablement mémorisée à l'aide des moyens de mémorisation (101), la deuxième règle prédéterminée étant propre au deuxième niveau de priorité de la deuxième mesure.

13. Procédé de granulation selon la revendication 12, **caractérisé en ce qu'**il comprend des étapes suivantes consistant à :
- comparer (801) à l'aide du calculateur (102) la deuxième mesure additionnelle avec au moins une troisième valeur seuil propre au deuxième paramètre préalablement mémorisée à l'aide des moyens de mémorisation (101) en attribuant à ladite deuxième mesure additionnelle au moins un troisième niveau de priorité prédéterminé,
- définir (802) à l'aide du calculateur (102) au moins un premier indice de correction du pourcentage relatif entre les matières premières alternatives (2) et les additifs (29) sélectionnés en appliquant au moins une troisième règle prédéterminée préalablement mémorisée à l'aide des moyens de mémorisation (101), la troisième règle prédéterminée étant propre au troisième niveau de priorité de ladite deuxième mesure additionnelle.

14. Procédé de granulation selon la revendication 12 ou 13, **caractérisé en ce qu'**il comprend des étapes suivantes consistant à :
- comparer (803) à l'aide du calculateur (102) l'autre deuxième mesure additionnelle avec au moins une quatrième valeur seuil propre au troisième paramètre préalablement mémorisée à l'aide des moyens de mémorisation (101) en attribuant à ladite autre deuxième mesure additionnelle au moins un quatrième niveau de priorité prédéterminé,
- définir (804) à l'aide du calculateur (102) au moins un second indice de correction du pourcentage relatif entre les matières premières alternatives (2) et les additifs (29) sélectionnés en appliquant au moins une quatrième règle prédéterminée préalablement mémorisée à l'aide des moyens de mémorisation (101), la quatrième règle prédéterminée étant propre au quatrième niveau de priorité de ladite autre deuxième mesure additionnelle.

15. Dispositif de fabrication (4) pour la mise en oeuvre du procédé de granulation selon au moins l'une des revendications 1 à 14 **caractérisé en ce qu'**il comprend au moins un réacteur (80) comportant :
- au moins un granulateur (50) comportant des moyens de régulation,
- un organe de pilotage comportant au moins un calculateur (102) et des moyens de mémorisation (101),
- au moins un premier appareil de mesure (100) en temps réel d'au moins un des constituants d'un matériau de construction de synthèse (1).

## Patentansprüche

1. Granulierverfahren für die Herstellung von synthetischen Baumaterialien (1) durch Recycling alternativer Primärstoffe (2), **dadurch gekennzeichnet, dass** dieses die folgenden Schritte umfasst, bestehend aus:
- Umwandeln (15) der alternativen Primärstoffe (2) in ein synthetisches Baumaterial (1) mithilfe wenigstens eines Reaktors (80), der wenigstens eine Granuliereinrichtung (50) aufweist,
- Entnehmen (400) einer repräsentativen Stichprobe des synthetischen Baumaterials (1) mithilfe erster Entnahmemittel (4000),
- Durchführen (401) in Echtzeit einer ersten Messung mithilfe wenigstens eines ersten Messgerätes (100), indem wenigstens ein erster Bestandteil der entnommenen Probe des synthetischen Materials (1) analysiert wird,
- Vergleichen (402) der ersten Messung mit wenigstens einem für den ersten Bestandteil geeigneten Schwellenwert, der vorher mithilfe einer Speichereinrichtung (101) gespeichert wurde, indem der ersten Messung wenigstens eine vorbestimmte erste Prioritätsstufe zugewiesen wird,
- Bilden (403) mithilfe wenigstens eines Rechners (102) wenigstens eines ersten Steuerbefehls zur Durchfühning einer Steuerung der Steuereinrichtung der Granuliereinrichtung (50), indem wenigstens eine vorbestimmte erste Regel angewendet wird, die vorher mithilfe der Speichereinrichtung (101) gespeichert wurde, wobei die vorbestimmte erste Regel für die erste Prioritätsstufe der ersten Messung geeignet ist.

2. Granulierverfahren nach Anspruch 1, dass dieses einen Schritt umfasst, bestehend aus einem Befehlen (404) durch den Rechner (102), in Abhängigkeit von der vorbestimmten ersten Prioritätsstufe, die der ersten Messung zugewiesen wurde, der Durchfühning in Echtzeit wenigstens einer zusätzlichen ersten Messung, indem wenigstens ein weiterer Bestandteil, der sogenannte zweiten Bestandteil, des synthetischen Baumaterials (1) analysiert wird.

3. Granulierverfahren nach Anspruch 1 oder 2, **dadurch gekennzeichnet, dass** der erste Bestandteil Wasser (9) ist, und dass das erste Messgerät (100) wenigstens eine Vorrichtung (103) umfasst, die einen Restfeuchtigkeitswert in dem synthetischen Baumaterial (1) misst.

4. Granulierverfahren nach Anspruch 2 oder 3, **dadurch gekennzeichnet, dass** der zweite Bestandteil durch granulierte Teilchen gebildet wird, die sich aus dem synthetischen Baumaterial (1) ergeben, und dass das erste Messgerät (100) wenigstens eine Vorrichtung (104) umfasst, welche eine Größenverteilung der granulierten Teilchen in dem synthetischen Baumaterial (1) misst.

5. Granulierverfahren nach einem der Ansprüche 1 bis 4, **dadurch gekennzeichnet, dass** dieses die folgenden Schritte umfasst, bestehend aus:
- Aufnehmen (1000) eines Anteils alternativer Primärstoffe mithilfe von Rezeptionsmitteln (1100),
- Entnehmen (1001) einer repräsentativen Stichprobe des Anteils mithilfe zweiter Entnahmemittel (1101),
- Durchführen (1002) in Echtzeit einer zweiten Messung mithilfe wenigstens eines zweiten Messgerätes (1102), indem wenigstens ein repräsentativer erster Parameter der entnommenen Stichprobe des Anteils analysiert wird,
- Vergleichen (1003) der zweiten Messung mit wenigstens einem zweiten Schwellenwert, der für den vorher mithilfe der Speichereinrichtung (101) gespeicherten ersten Parameter geeignet ist, indem der zweiten Messung wenigstens eine vorbestimmte zweite Prioritätsstufe zugewiesen wird.

6. Granulierverfahren nach Anspruch 5, **dadurch gekennzeichnet, dass** dieses einen Schritt umfasst, bestehend aus einem Befehlen (1004) durch den Rechner (102), in Abhängigkeit von der zweiten vorbestimmten Prioritätsstufe, die der zweiten Messung zugewiesen ist, der Durchfühning in Echtzeit wenigstens einer zusätzlichen zweiten Messung, indem wenigstens ein weiterer repräsentativer Parameter, der sogenannte zweite Parameter, der entnommenen Stichprobe des Anteils analysiert wird.

7. Granulierverfahren nach Anspruch 5 oder 6, **dadurch gekennzeichnet, dass** dieses einen Schritt umfasst, bestehend aus einem Befehlen (1005) durch den Rechner (102), in Abhängigkeit von der zweiten vorbestimmten Prioritätsstufe, die der zweiten Messung zugewiesen ist, die Durchfühning in Echtzeit wenigstens einer weiteren zusätzlichen zweiten Messung, indem wenigstens ein weiterer repräsentativer Parameter, der sogenannte dritte Parameter, der entnommenen Stichprobe des Anteils analysiert wird.

8. Granulierverfahren nach einem der Ansprüche 5 bis 7, **dadurch gekennzeichnet, dass** der erste Parameter der Feuchtigkeitswert ist, und dass das zweite Messgerät (1102) wenigstens eine Vorrichtung (103) umfasst, welche den Feuchtigkeitswert in der entnommenen Stichprobe des Anteils misst.

9. Granulierverfahren nach einem der Ansprüche 6 bis 8, **dadurch gekennzeichnet, dass** der zweite Parameter die Größe der granulierten Teilchen ist, und dass das zweite Messgerät (1102) wenigstens eine Vorrichtung (104) umfasst, welche eine Größenverteilung der granulierten Teilchen in der entnommenen Stichprobe des Anteils misst.

10. Granulierverfahren nach einem der Ansprüche 7 bis 9, **dadurch gekennzeichnet, dass** der dritte Parameter die Dichte ist, und dass das zweite Messgerät (1102) wenigstens eine Vorrichtung (105) umfasst, welche die Dichte der entnommenen Stichprobe des Anteils misst.

11. Granulierverfahren nach einem der Ansprüche 5 bis 10, **dadurch gekennzeichnet, dass** dieses die folgenden Schritte umfasst, bestehend aus:
- Empfangen (700) mithilfe einer Fernübertragungseinrichtung (1020) wenigstens repräsentativer Strukturkennwerte eines Referenz-Baumaterials, sogenannter Referenzkennwerte (7),
- Speichern (701) mithilfe der Speichereinrichtung (101) der Referenzkennwerte (7),
- Auswählen (702) durch den Rechner (102) von Additiven (29) mit vorher mithilfe der Speichereinrichtung (101) gespeicherter physikochemischer Eigenschaften, um diese den alternativen Primärstoffen (2) hinzuzufügen, um mithilfe der Granuliereinrichtung (50) das synthetische Konstruktionsmaterial (1) herzustellen, welches Kennwerte aufweist, die mit denjenigen der Referenz (7) identisch sind.

12. Granulierverfahren nach Anspruch 11, **dadurch gekennzeichnet, dass** dieses einen Schritt (800) umfasst, der darin besteht, mithilfe des Rechners (102) wenigstens einen relativen Prozentsatz zwischen den alternativen Primärstoffen (2) und den ausgewählten Additiven (29) zu bilden, um das synthetische Baumaterial (1) mithilfe der Granuliereinrichtung (50) unter Anwendung wenigstens einer vorher mithilfe der Speichereinrichtung (101) gespeicherten, vorbestimmten zweiten Regel herzustellen, wobei die zweite vorbestimmte Regel für die zweite Prioritätsstufe der zweiten Messung geeignet ist.

13. Granulierverfahren nach Anspruch 12, **dadurch gekennzeichnet, dass** dieses die folgenden Schritte umfasst, bestehend aus:
- Vergleichen (801) mithilfe des Rechners (102) der zusätzlichen zweiten Messung mit wenigstens einem dritten Schwellenwert, der für den vorher mithilfe der Speichereinrichtung (101) gespeicherten zweiten Parameter geeignet ist, indem der zusätzlichen zweiten Messung wenigstens ein vorbestimmtes drittes Prioritätsniveau zugewiesen wird,
- Bilden (802) mithilfe des Rechners (102) wenigstens eines ersten Korrekturindices des relativen Prozentsatzes zwischen den alternativen Primärstoffen (2) und den ausgewählten Additiven (29), indem wenigstens eine vorher mithilfe der Speichereinrichtung (101) gespeicherte vorbestimmte dritte Regel angewendet wird, wobei die vorbestimmte dritte Regel für die dritte Prioritätsstufe der zusätzlichen zweiten Messung geeignet ist.

14. Granulierverfahren nach Anspruch 12 oder 13, **dadurch gekennzeichnet, dass** dieses die folgenden Schritte umfasst, bestehend aus:
- Vergleichen (803) mithilfe des Rechners (102) der zusätzlichen weiteren zweiten Messung mit wenigstens einem vierten Schwellenwert, der für den vorher mithilfe der Speichereinrichtung (101) gespeicherten dritten Parameter geeignet, indem der zusätzlichen weiteren zweiten Messung wenigstens eine vorbestimmte vierte Prioritätsstufe, die sogenannte vierte Prioritätsstufe, zugewiesen wird,
- Bilden (804) mithilfe des Rechners (102) wenigstens eines zweiten Korrekturindices des relativen Prozentsatzes zwischen den alternativen Primärstoffen (2) und den ausgewählten Additiven (29), indem wenigstens eine vierte, vorher mithilfe der Speichereinrichtung (101) gespeicherte vorbestimmte Regel angewendet wird, wobei die vorbestimmte vierte Regel für die vierte Prioritätsstufe der zusätzlichen weiteren zweiten Messung geeignet ist.

15. Herstellmaschine (4) zur Durchfühning des Granulierverfahrens nach wenigstens einem der Ansprüche 1 bis 11, **dadurch gekennzeichnet, dass** diese wenigstens einen Reaktor (80) umfasst, mit:
- wenigstens einer Granuliereinrichtung (50) mit Reguliermitteln, einer Steuereinrichtung mit wenigstens einem Rechner (102) und Speichermitteln (101),
- wenigstens einem ersten Echtzeit-Messgerät (100) für wenigstens einen der Bestandteile eines synthetischen Baumaterials (1).

## Claims

1. Granulation method for manufacturing of synthetical building materials (1) by recycling of alternative raw materials (2), **characterized in that** it comprises following stages consisting in:
- transform (15) the said alternative raw materials (2) with the help of at least a reactor (80) comprising at least a granulator (50), in a synthetical building material (1),
- collect (400) with the help of first collecting means (4000) a representative sample of the said synthetical building material (1),
- realize (401) in real time with the help of at least a first measurement apparatus (100) a first measurement by analyzing at least a first constituent of the sample collected from the synthetical building material (1),
- compare (402) the said first measurement with at least a first threshold value specific to the said first constituent previously stored with the help of storage means (101) by assigning to the said first measurement at least a first predetermined priority level,
- define (403) with the help of at least a calculator (102) at least a first regulation set point for a regulation update of regulating means of the granulator (50) by applying at least a first predetermined rule previously stored with the help of the storage means (101), the first predetermined rule being specific to the first predetermined priority level of the first measurement.

2. Granulation method according to claim 1, **characterized in that** it comprises a stage consisting in order (404) by the calculator (102), depending on the first predetermined priority level allocated to the first measurement, realizing in real time of at least a first additional measurement by analyzing at least another constituent, called second constituent, of the said synthetical building material (1).

3. Granulation method according to claim 1 or 2, **characterized in that** the said first constituent is water (9), and **in that** the first measurement apparatus (100) comprises at least a device (103) measuring a degree of residual humidity into the said synthetical building material (1).

4. Granulation method according to claim 2 or 3, **characterized in that** the second constituent is formed by granulated particles issued from the synthetical building material (1), and **in that** the first measurement apparatus (100) comprises at least a device (104) measuring a size distribution of the granulated particles into the synthetical building material (1).

5. Granulation method according to anyone of claims 1 to 4, **characterized in that** it comprises following stages consisting in:
- receive (1000) with the help of reception means (1100) a batch of the alternative raw materials (2),
- collect (1001) with the help of second collecting means (1101) a representative sample of the batch,
- realize (1002) in real time with the help of at least a second measurement apparatus (1102) a second measurement by analyzing at least a first representative parameter of the sample collected from the batch,
- compare (1003) the said second measurement with at least a second threshold value specific to the first parameter previously stored with the help of the storage means (101) by assigning to the said second measurement at least a second predetermined priority level.

6. Granulation method according to claim 5, **characterized in that** it comprises a stage consisting in order (1004) by the calculator (102), depending on the second predetermined priority level allocated to the second measurement, realizing in real time of at least a second additional measurement by analyzing at least another representative parameter, called second parameter, of the sample collected from the batch.

7. Granulation method according to claim 5 or 6, **characterized in that** it comprises a stage consisting in order (1005) by the calculator (102), depending on the second predetermined priority level allocated to the second measurement, realizing in real time of at least another second additional measurement by analyzing at least another representative parameter, called third parameter, of the sample collected from the batch.

8. Granulation method according to anyone of claims 5 to 7, **characterized in that** the first parameter is the degree of residual humidity, and **in that** the second measurement apparatus (1102) comprises at least a device (103) measuring the degree of humidity into the said sample collected from the batch.

9. Granulation method according to anyone of claims 6 to 8, **characterized in that** the second parameter is the size of the granulated particles, and **in that** the second measurement apparatus (1102) comprises at least a device (104) measuring a size distribution of granulated particles into the sample collected from the batch.

10. Granulation method according to anyone of claims 7 to 9, **characterized in that** the third parameter is the density, and **in that** the second measurement apparatus (1102) comprises at least a device (105) measuring the density of the sample collected from the batch.

11. Granulation method according to anyone of claims 5 to 10, **characterized in that** it comprises following stages consisting in:
- receive (700) with the help of teletransmission means (1020) at least representative features of structure of a reference building material, called reference features (7),
- store (701) with the help of storage means (101) the said reference features (7),
- select (702) by the calculator (102) additives (29) with physicochemical proprieties previously stored with the help of storage means (101), to add into the alternative raw materials (2) for manufacturing with the help of the granulator (50) the synthetical building material (1) with features identical to those of reference (7).

12. Granulation method according to claim 11, **characterized in that** it comprises a stage (800) consisting in define with the help of the calculator (102) at least a relative percentage between the alternative raw materials (2) and the additives (29) selected for manufacturing the synthetical building material (1) with the help of the granulator (50) by applying at least a second predetermined rule previously stored with the help of the storage means (101), the second predetermined rule being specific to the second predetermined priority level of the second measurement.

13. Granulation method according to claim 12, **characterized in that** it comprises following stages consisting in:
- compare (801) with the help of the calculator (102) the second additional measurement with at least a third threshold value specific to the second parameter previously stored with the help of storage means (101) by assigning to the said second additional measurement at least a third predetermined priority level,
- define (802) with the help of at least a calculator (102) at least a first correction index of the relative percentage between the alternative raw materials (2) and the selected additives (29) by applying at least a third predetermined rule previously stored with the help of the storage means (101), the third predetermined rule being specific to the third predetermined priority level of the said second additional measurement.

14. Granulation method according to claim 12 or 13, **characterized in that** it comprises following stages consisting in:
- compare (803) with the help of the calculator (102) the another second additional measurement with at least a fourth threshold value specific to the third parameter previously stored with the help of storage means (101) by assigning to the said another second additional measurement at least a fourth predetermined priority level,
- define (804) with the help of at least a calculator (102) at least a second correction index of the relative percentage between the alternative raw materials (2) and the selected additives (29) by applying at least a fourth predetermined rule previously stored with the help of the storage means (101), the fourth predetermined rule being specific to the fourth predetermined priority level of the said another second additional measurement.

15. Dispositif of manufacturing (4) for carrying out of the granulation method according to at least one of claims 1 to 14, **characterized in that** it comprises at least a reactor (80) comprising:
- at least a granulator (50) comprising regulating means,
- a control unit comprising at least a calculator (102) and storage means (101),
- at least a first real time measurement apparatus (100) of at least one of constituents of the synthetical building material (1).
